# EUROPÄISCHE PATENTANMELDUNG

(11) **EP 1 484 154 A1**
(43) Veröffentlichungstag der Anmeldung: **08.12.2004**
(21) Anmeldenummer: 03012891.2
(22) Anmeldetag: 06.06.2003
(51) Int. Cl.: B29C 45/17, B29C 45/16, B65D 1/24

(54) **Mehrrohstoff-Spritzgiessen mittels Kernzug-Verfahren**

(71) Anmelder: Plamatec AG, 8117 Fällanden (CH)
(72) Erfinder: Umiker, Hans, Dipl.-Ing., 8132 Egg (CH); Leimbach, Gerhard, Dipl.-Ing., 34123 Kassel-Bettenhausen (DE)
(74) Vertreter: Leske, Thomas, Dr.

(57) **Zusammenfassung**

Verfahren zum Spritzgießen von Kunststoffelementen, insbesondere von Kunststoffhandgriffen, unter Verwendung einer ersten Spritzeinheit 9, einer Düseneinheit 10 und einer zweiten Spritzeinheit 11. Mittels der ersten Spritzeinheit 9 wird ein tragendes Spritzgussteil 13 aus einem Kunststoff geformt, in dessen Inneres durch eine Düseneinheit 10 ein weiteres Medium eingespritzt wird. Die zweite Spritzeinheit 11 ermöglicht das Einspritzen eines weiteren Kunststoffs 14, der die Qualität der äußeren Oberfläche des tragenden Spritzgussteils 13 aus dem ersten Kunststoff bestimmt.

## Beschreibung

Die vorliegende Erfindung bezieht sich auf ein Verfahren zum Spritzgießen von Kunststoffelementen, insbesondere von Kunststoffhandgriffen, unter Benutzung einer ersten und mindestens einer zweiten Spritzeinheit. Die erste Spritzeinheit formt in einer ersten Phase ein tragendes Spritzgussteil, mit einem Hohlraum, der in einer zweiten Phase durch Einspritzen eines weiteren Mediums mittels einer Düseneinheit erzeugt und befüllt wird. Eine zweite Spritzeinheit liefert in einer dritten Phase einen weiteren Kunststoff und bestimmt die Qualität der äußeren Oberfläche des Spritzgussteils. Kunststoffe sind dabei alle Materialen, die synthetisch oder durch Abwandlung von Naturprodukten entstehen.

Kunststoffelemente verschiedenster Art finden in nahezu allen Bereichen des Lebens Verwendung. Abhängig von der Verwendung dieser Kunststoffelemente werden unterschiedliche Ansprüche an diese Elemente gestellt. Besondere Schwierigkeiten ergeben sich bei der Herstellung von Kunststoffelementen, die aus mehreren Komponenten, d. h. verschiedenartigen Kunststoffen, bestehen. Solche Mehrkomponenten-Kunststoffelemente sind insbesondere gefragt für die Herstellung von Handgriffen für Transportbehälter, beispielsweise Flaschenkästen oder Obststeigen. Dabei müssen sich die Handgriffe durch Stabilität auszeichnen und einen gewissen Tragekomfort bieten, der ein bequemes und rutschfestes Tragen der Transportbehälter ermöglicht.

Die bislang bekannten Mehrkomponenten-Kunststoffelemente bestehen zumeist aus Kunststoffen gleicher Art, die sich lediglich in der Farbe unterscheiden. Für die Herstellung von Mehrkomponenten-Kunststoffelementen, die sich in den Eigenschaften der Kunststoffe unterscheiden, war bislang ein aufwändiges Verfahren nötig. Insbesondere wird es dann schwierig, wenn Kunststoffelemente, die aus verschiedenen Komponenten bestehen, nur in einem Teilbereich vorhanden sein sollen, wie dies bei Handgriffen eines Transportbehälters der Fall ist. Es ist bekannt, dass für die Herstellung von Transportbehältern, die sich durch spezielle Handgriffe auszeichnen, ein erstes Kunststoffelement in der gewünschten Form des Handgriffes spritzgegossen wird, das meist U- oder E-Profile aufweist, die nach innen oder nach außen gekehrt sind. Dieses erste Kunststoffelement wird aus seiner Spritzgussform gelöst und mittels eines Roboters in eine weitere Spritzgussform eingelegt. Darin wird das Kunststoffelement mit einer weiteren Komponente umspritzt.

Dieses Verfahren hat sich als sehr teuer und zeitaufwändig erwiesen. Das Kunststoffelement wird separat produziert und nach Transport durch einen Roboter weiterverarbeitet. Dadurch ist ein hoher Zeitaufwand erforderlich, der sich aus der Trockenzeit des ersten Kunststoffelements und dem Transportweg zur Weiterverarbeitung ergibt. Zudem entstehen hohe Kosten durch den Anschaffungspreis solcher sogenannter Einlegerobotoren als auch durch die Anmietung beziehungsweise den Unterhalt von Lagerräumen, in denen die Trocknung und Zwischenlagerung der Kunststoffelemente vor der Weiterverarbeitung erfolgt.

Des weiteren besteht durch dieses Herstellungsverfahren in mehreren Schritten die Gefahr, dass die nach diesem Verfahren hergestellten Handgriffe nicht optimal mit dem Transportbehälter verbunden sind. So können sich beispielsweise undichte Stellen ergeben, die zu Wasseransammlungen und damit zur Absprengung des Handgriffes führen können. Dies bringt eine deutliche Verkürzung der Lebensdauer solcher Transportbehälter mit sich.

Der Stand der Technik hat zwar auf dem Gebiet dieser "Softhandgriffe" einen Fortschritt gemacht, allerdings nicht in kunststoffgerechter Art. Es werden separate weiche Handgriffe gespritzt und mit Robotern in die Form eingelegt und hernach umspritzt mit der Hauptkomponente, vgl. Fachzeitschrift "Pack Aktuell", worin eine "Kiste" mit dem sanften Griff beschrieben ist.

Es ist zu erkennen, dass das grüne "Weichteil" gerade einmal die fingernahen Konturen abdeckt. Noch immer bleibt der Großteil des Griffes lamellenförmig ausgebildet. Dies ist letztlich unerwünscht, denn die Lamellen sind logischerweise schmutzanfällig und auch in modernen Kastenwaschern schwer zu reinigen. Zudem bleibt zufolge der Adhäsion relativ viel Wasser in den Lamellen hängen. Man überträgt somit in den Waschanlagen detergentienhaltiges Wasser in die Klarwassereinheit und braucht somit mehr Detergentien, aber auch mehr Spülwasser. Die Trocknungsphase wird ebenfalls verlängert.

Bei der Herstellung von Kunststoffelementen nach dem bekannten Mehrkomponentensystem der Windsor-Kunststofftechnologie können weitere Spritzeinheiten anmontiert werden, die das Aufbringen von verschiedenen Kunststoffen gleichzeitig ermöglichen. Ohne ein zusätzliches Medium ergeben sich allerdings Probleme. Zwar verringert das gleichzeitige Einspritzen verschiedener Kunststoffe die Wahrscheinlichkeit undichter Stellen, aber das Problem langer Trocknungszeiten des Kunststoffes bleibt bestehen. Diese lange Trocknungszeit des Kunststoffelements birgt zudem die Gefahr von partiellen Schrumpfungsprozessen, die zu Einfallstellen führen können und eine rauhe, nicht plane Oberfläche des Kunststoffelements zur Folge haben.

Aufgabe der vorliegenden Erfindung ist deshalb die Herstellung eines Kunststoffelements, insbesondere eines Kunststoffhandgriffs für Transportbehälter wie Flaschenkästen oder Obststeigen, das (bzw. der) einen optimalen festigkeitstechnischen Querschnitt und eine optimale, handfreundliche Oberflächenstruktur aufweist und dieses Ergebnis mit einer optimalen Produktionsgeschwindigkeit (Zykluszeit) verbindet.

Diese Aufgabe wird gelöst durch ein Verfahren zum Spritzgießen von Kunststoffelementen mit den Verfahrensschritten des Anspruchs 1, durch ein Kunststoffelement nach Anspruch 7 und durch eine entsprechende Spritzgussvorrichtung nach Anspruch 9. Vorteilhafte Ausführungen der Erfindung sind Gegenstand der abhängigen Ansprüche.

Das erfindungsgemäße Verfahren zum Spritzgießen von Kunststoffelementen, insbesondere von Kunststoffhandgriffen, zeichnet sich dadurch aus, dass das Kunststoffelement aus mehreren Komponenten besteht. Dazu formt eine erste Spritzeinheit ein tragendes Spritzgussteil aus einem ersten Kunststoff. Eine Düseneinheit spritzt ein weiteres Medium wie Gas, Flüssigkeit oder ein ähnlich geeignetes Medium in das Innere des tragenden Spritzgussteils ein und bildet einen erfindungsgemäßen Hohlraum aus. Dieser Hohlraum kann mit allen möglichen Medien gefüllt sein. Es kann sich um ein Gas handeln, wie zum Beispiel Luft oder das Gas kann Helium sein, dessen Einblasung kühlend wirkt. Das Medium kann auch ein Fluid sein, also Flüssigkeit, wie zum Beispiel Wasser oder ein Mineralpulver, wie zum Beispiel Talkum-ähnliches Material. Schließlich kann der Hohlraum mit einer geschäumten Masse, beispielsweise einen PU-Schaum gefüllt sein. Schließlich fügt eine zweite Spritzeinheit einen weiteren Kunststoff an das tragende Spritzgussteil an, der die Qualität der äußeren Oberfläche des Spritzgussteils bestimmt. Dieses Verfahren ermöglicht vorteilhafterweise eine rasche Herstellung der Handgriffe und hat damit eine Verkürzung der Produktionszeit (Zykluszeit) zur Folge. Das Einspritzen eines weiteren Mediums wie Gas, Flüssigkeit, Pulverschaum oder eines ähnlich geeigneten Mediums erlaubt die Herstellung eines dünnwandigen tragenden Spritzgussteils durch die erste Spritzeinheit, das durch das weitere Medium stabilisiert wird. Gleichzeitig begünstigt es das Abkühlen des ersten Kunststoffes, was eine Verkürzung der Trocknungszeit und die Ausbildung einer gleichmäßigen Oberfläche bewirkt. Vorteilhafterweise entsteht durch das eingespritzte Medium ein Innendruck, der gegen die Innenseite des ersten Kunststoffteils gerichtet ist und Schrumpfungsprozesse des Kunststoffes aussteuert. Zudem werden auf diese Weise Einfallstellen vermieden, die im Falle von Schrumpfungsvorgängen wahrscheinlich sind. Die dadurch vorteilhaft entstehende glatte, gleichmäßige Oberfläche des tragenden Spritzgussteils aus dem ersten Kunststoff schafft die Grundlage für eine glatte Oberfläche des mit der zweiten Spritzeinheit aufgetragenen Kunststoffes. Vorzugsweise ist der zweite Kunststoff weicher als der erste, um das Tragen schwerer Lasten zu erleichtern. Besonders bevorzugt weist der zweite Kunststoff eine rutschfeste Oberfläche auf, die zu einem höheren Tragekomfort beiträgt. Vorteilhafterweise verhindert diese rutschfeste Oberfläche die Verwendung einer lamellenartigen Struktur im Bereich der Handgriffe, die eine Ansammlung von Schmutz und Waschwasser mit sich bringt. Damit führt die Herstellung von Kunststoffelementen nach dem erfindungsgemäßen Verfahren zu einem niedrigeren Verbrauch von Detergenzien und Spülwasser in der Klarwassereinheit. Weiterhin trägt diese Oberflächenstruktur der Kunststoffelemente zu einer Verkürzung der Trocknungsphase nach den Reinigungsprozessen der Transportbehälter bei.

Das in das Innere des tragenden Spritzgussteils eingespritzte Medium ist vorzugsweise flüssig, gas- oder pulverschaumförmig. Besonders geeignet sind Gase wie Helium, Gasgemische wie Luft, geschäumte Kunststoffverbindungen aus PU, Mineralpulver wie Talkum, oder Wasser. Vorteilhafterweise zeichnen sich diese Medien durch ein geringes Eigengewicht auf, tragen aber zur Stabilität der Kunststoffelemente, insbesondere der Handgriffe, bei. Zudem sind die eingespritzten Medien billig, so dass die Herstellungskosten niedrig gehalten werden.

Bestehende Anlagen zum Spritzgießen von Kunststoffelementen nach den bislang bekannten Verfahren können vorteilhafterweise einfach und mit geringem Kostenaufwand auf die Anwendung des Verfahrens nach der vorliegenden Erfindung umgerüstet werden. Hierzu bieten sich beispielsweise die oben erwähnten Zusatzaggregate der Firma Windsor an. Es ist somit ein großer Vorteil der Erfindung, dass die Anschaffung neuer teurer Maschinen entfällt, die Nachrüstung in kurzer Zeit vor Ort erfolgt und die bereits vorhandenen Produktionsflächen optimal genutzt werden. Vorzugsweise sind die Düseneinheit zum Einspritzen eines weiteren Mediums und die zweite Spritzeinheit für den zweiten Kunststoff eigenständige Module, die auf eine erste Spritzgießeinheit aufgesetzt werden. Besonders vorteilhaft können die Module in jedem Winkel zur ersten Spritzgießeinheit installiert werden. Aus diese variablen Platzierung der Module ergibt sich zudem die Möglichkeit weitere Module, d. h. weitere Spritzgießeinheiten oder Düseneinheiten, anzufügen. Alternativ dazu können die Spritzgießeinheiten und/oder die Düseneinheiten integriert gebaut sein. Sowohl bei der Integration als auch bei dem modularen Aufbau der Spritzgießanlage ist die Art und Menge des eingespritzten Mediums auf die Kunststoffe abgestimmt. Weiterhin ist jeder weitere Kunststoff in Art und Menge auf den ersten Kunststoff und das eingespritzte Medium abgestimmt.

Dieses Verfahren wird als 2K PLUS-Verfahren bezeichnet. Dabei bezeichnet "2K" die Verwendung von zwei Kunststoff-Komponenten. "PLUS" bezeichnet den oben beschriebenen Hohlraum, der mit den verschiedensten Medien gefüllt werden kann. Ein Ausführungsbeispiel für den Hohlraum ist die bekannte Airmold-Technologie.

Die Airmold-Technologie ermöglicht vorteilhafterweise eine rasche Abkühlung des Kunststoffes, so dass Phase 3 früher beginnen kann, da die in Phase 1 erzeugte Temperatur rascher absinkt. Dies führt zu einer Verringerung der Zykluszeit. Des weiteren erlaubt die Airmold-Technologie eine verbesserte und somit genaue Steuerung der Wandstärke des Kunststoffelements, die durch Schrumpfungsprozesse mitbestimmt ist. Insbesondere entstehen keine Einfallstellen im ersten, tragenden Spritzgussteil, die durch die zweite Auflage nicht mehr ausgleichen werden könnten. Ferner wird die Oberfläche des tragenden Spritzgussteils durch das Aufbringen des zweiten Kunststoffs blank und glatt.

Vorzugsweise erfolgt die Steuerung der Spritzeinheiten und der Düseneinheit separat. Besonders bevorzugt werden die zweite und jede weitere Spritzeinheit sowie die Düseneinheit über die erste Spritzeinheit gesteuert (d.h. die Steuerung wird mit der normalen Hauptmaschinensteuerung verbunden bzw. synchronisiert), wodurch eine optimale Feinabstimmung der Spritzeinheiten und der Düseneinheit erreicht wird.

Für das Anbringen der zweiten Spritzeinheit gibt es zwei verschiedene Ausführungsformen. Einmal kann eine zusätzliche, kleine, schräge Spritzeinheit auf existierende Spritzgussmaschinen aufgesetzt werden (Windsor-Technologie). Zum anderen kann die erste und zweite Spritzeinheit gemeinsam in eine Spritzgussmaschine eingebaut sein.

Weitere Anwendungsmöglichkeiten und Vorteile der vorliegenden Erfindung ergeben sich aus der nachfolgenden Beschreibung unter Bezugnahme auf die Zeichnungen.
- Fig. 1:: Das Formen eines tragenden Spritzgussteils aus einem ersten Kunststoff in Phase 1.
- Fig. 2:: Das Einspritzen eines weiteren Mediums in das Innere des tragenden Spritzgussteils gemäß Phase 1 in Phase 2.
- Fig. 3a:: Das Aufbringen eines weiteren Kunststoffs auf Teilbereiche des tragenden Spritzgussteils der Phase 1 in Phase 3.
- Fig. 3b:: Das Aufbringen eines weiteren Kunststoffs auf die innere und äußere Oberfläche eines Handgriffs gemäß Phase 1 in Phase 3.
- Fig. 4:: Schematische Darstellung einer zweiten Spritzeinheit

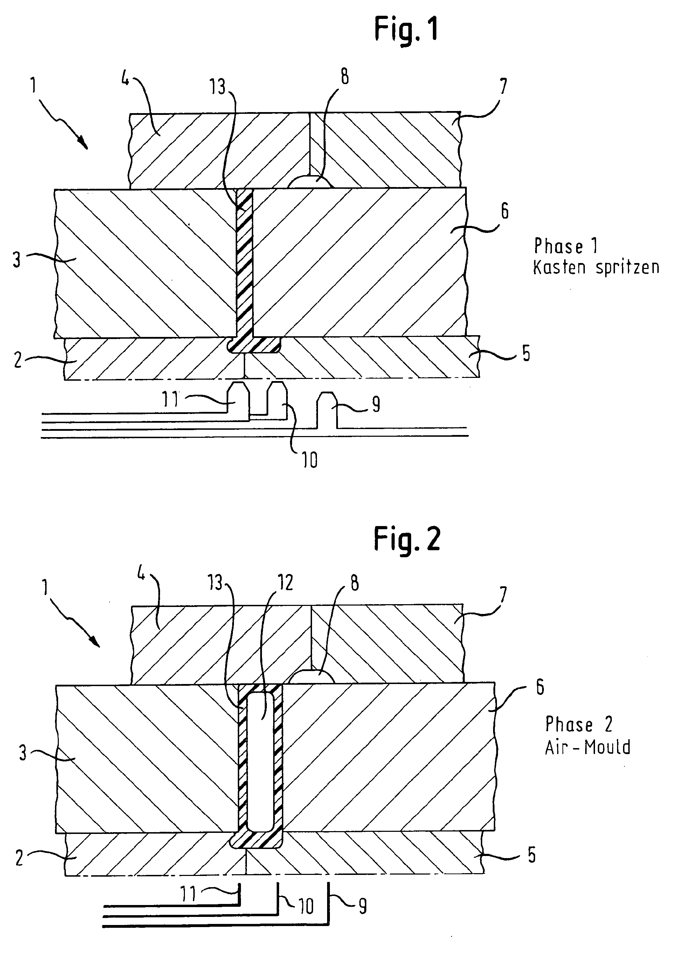

Die Fig. 1 zeigt eine Phase 1 einer möglichen Ausführungsform des erfindungsgemäßen Verfahrens unter Verwendung einer Spritzgießvorrichtung 1 bestehend aus einer Backe 2, Duplexschieberbacke 3, Griffschieberbacke 4, Kern 5, Duplexschieberkem 6, Griffschieberkern 7, Aussparung 8 in der Griffschieberbacke 4 und dem Griffschieberkern 7, erste Spritzeinheit 9 für einen ersten Kunststoff, Düseneinheit 10 zum Einspritzen eines Mediums und zweite Spritzeinheit 11 zum Aufbringen eines weiteren Kunststoffs.

In Phase 1 (Fig. 1) des erfindungsgemäßen Verfahrens wird durch eine erste Spritzeinheit 9 ein erster Kunststoff in eine Form, z. B. eine Form zur Herstellung von Transportbehältern eingebracht. Diese Form wird gebildet durch Backe 2, Duplexschieberbacke 3, Griffschieberbacke 4, Kern 5 und Duplexschieberkem 6. Die Düseneinheit 10 und die Spritzeinheit 11 sind dabei deaktiviert und die Schieber 15 und 16 der Spritzeinheit 11 sind vorgefahren. Die Phasen können auch ineinander übergehen.

Die Fig. 2 zeigt Phase 2 des erfindungsgemäßen Verfahrens, in der die erste Spritzeinheit 9 und die zweite Spritzeneinheit 11 deaktiviert sind und die Düseneinheit 10 aktiviert ist. Mittels der Düseneinheit 10 wird ein weiteres Medium, wie z.B. Helium, Luft, Wasser oder ein in ähnlicher Weise geeignetes Material, in das Innere 12 des tragenden Spritzgussteils 13 eingebracht. Dadurch ist der Hohlraum des tragenden Spritzgussteils 13 gefüllt und es entsteht ein Innendruck, der gegen die Innenwand dieses Spritzgussteils 13 gerichtet ist. Damit wird das Spritzgussteil 13 gegen die Spritzgussform bestehend aus Backe 2, Duplexschieberbacke 3, Griffschieberbacke 4, Kern 5 und Duplexschieberkern 6 gepresst und in Form gehalten. Dies verhindert Verformungen, z.B. durch Schrumpfungsprozesse des Spritzgussteils 13 während der Trocknungsphase. Ein Kollabieren selbst dünnwandiger Spritzgussteile 13 wird auf diese Weise verhindert. Zudem weist das durch die Düseneinheit eingespritzte Medium vorzugsweise einen hohen Wärmekoeffizienten auf, so dass ein rasches und gleichmäßiges Abkühlen des tragenden Spritzgussteils möglich ist, der die Formstabilität begünstigt.

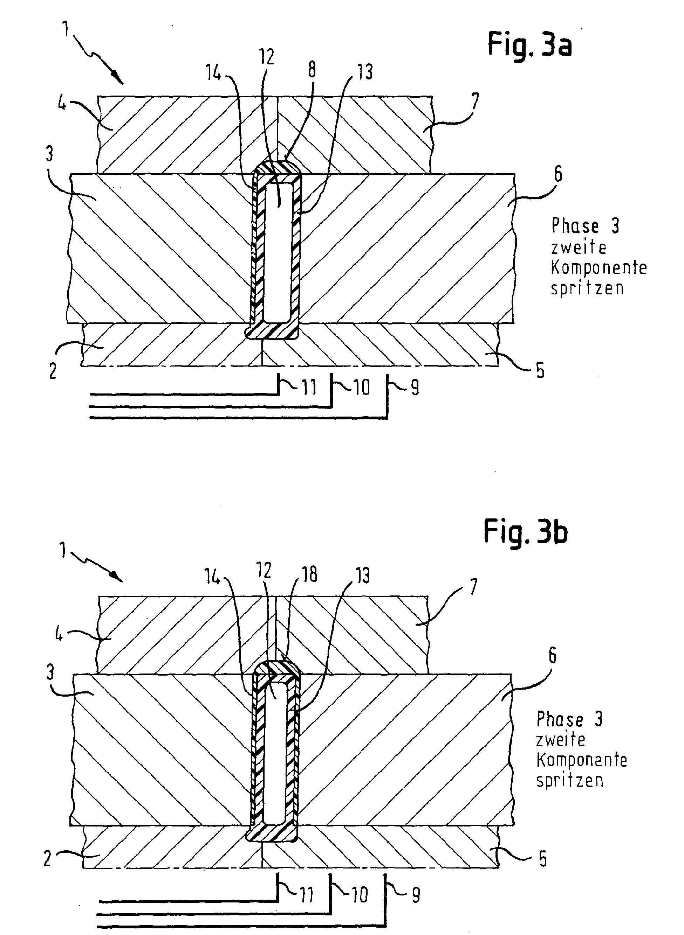

In Fig. 3a ist Phase 3 einer möglichen Ausführungsform des erfindungsgemäßen Verfahrens gezeigt. Dabei wird ein weiterer Kunststoff aus der zweiten Spritzeinheit 11 teilweise auf das tragende Spritzgussteil 13 aufgetragen. Hierzu werden die Griffschieberbacke 4 und der Griffschieberkern 7 gegen das tragende Spritzgussteil aus dem ersten Kunststoff verschoben, so dass die Aussparung 8 aus Griffschieberbacke 4 und Griffschieberkern 7 an dem tragenden Spritzgussteil 13 anliegt. Weiterhin werden Duplexschieberbacke 3 und Duplexschieberkern 6 von dem abgekühlten tragenden Spritzgussteil 13 entfernt und zwar in einem Abstand, der der gewünschten Dicke des weiteren Kunststoffs, der auf das tragende Spritzgussteil aufgetragen wird, entspricht. Die dem tragenden Spritzgussteil 13 zugewandten Seiten der Duplexschieberbacke 3 und des Duplexschieberkems 6 schließen mit der Aussparung 8 der Griffschieberbacke 4 und des Griffschieberkerns 7 ab. Damit bilden die Backe 2, die Duplexschieberbacke 3, die Aussparung 8 der Griffschieberbacke 4 und des Griffschieberkerns 7 sowie der Duplexschieberkem 6 die Form für den weiteren Kunststoff 14, der aus der zweiten Spritzeinheit 11 aufgebracht wird. Dieser Kunststoff 14 wird nun über die zweite Spritzeinheit 11 in die Form eingespritzt und mit dem tragenden Spritzgussteil 13 bestehend aus dem ersten Kunststoff verbunden. Während nun die zweite Spritzeinheit 11 aktiviert ist, sind die erste Spritzeinheit 9 und die Düseneinheit 10 deaktiviert. Vorteilhafterweise bleibt das tragende Spritzgussteil aus dem ersten Kunststoff in seiner Form und wird durch einen weiteren Kunststoff 14 ergänzt, ohne dass es zuvor aus der Form gelöst werden müsste und in eine weitere Form transportiert werden müsste. Hierbei ist Art und Menge des weiteren Kunststoffs 14 auf den ersten Kunststoff abgestimmt.

In Figur 3b ist eine weitere Ausführungsform des erfindungsgemäßen Verfahrens dargestellt, wobei das tragende Spritzgussteil aus dem ersten Kunststoff nahezu vollständig mit dem weiteren Kunststoff 14 überzogen wird. Die Aussparung 18 aus der Griffschieberbacke 4 und dem Griffschieberkern 7 wird gegen das tragende Spritzgussteil 13 verschoben und bildet mit dem gegen das Spritzgussteil gerichteten, zurückgezogenen Seiten der Duplexschieberbacke 3 und des Duplexschieberkerns 4 die Form für den weiteren Kunststoff 14. Der in Art und Menge mit dem ersten Kunststoff abgestimmte weitere Kunststoff 14 wird über die Spritzeinheit 11 in die Form eingespritzt und auf den ersten Kunststoff aufgebracht. Das zur Trocknung des ersten Kunststoffs beitragende und in Phase 2 eingebrachte zusätzliche Medium begünstigt ebenfalls die Trocknung des zweiten Kunststoffs aufgrund der bevorzugt hohen Wärmekapazität des Mediums.

Aus Figur 3a und Figur 3b ist ersichtlich, dass das vorliegende Verfahren zum Spritzgießen von Kunststoffelementen jeder Form und zur Kombination jeder Art von Kunststoffen verwendet werden kann.

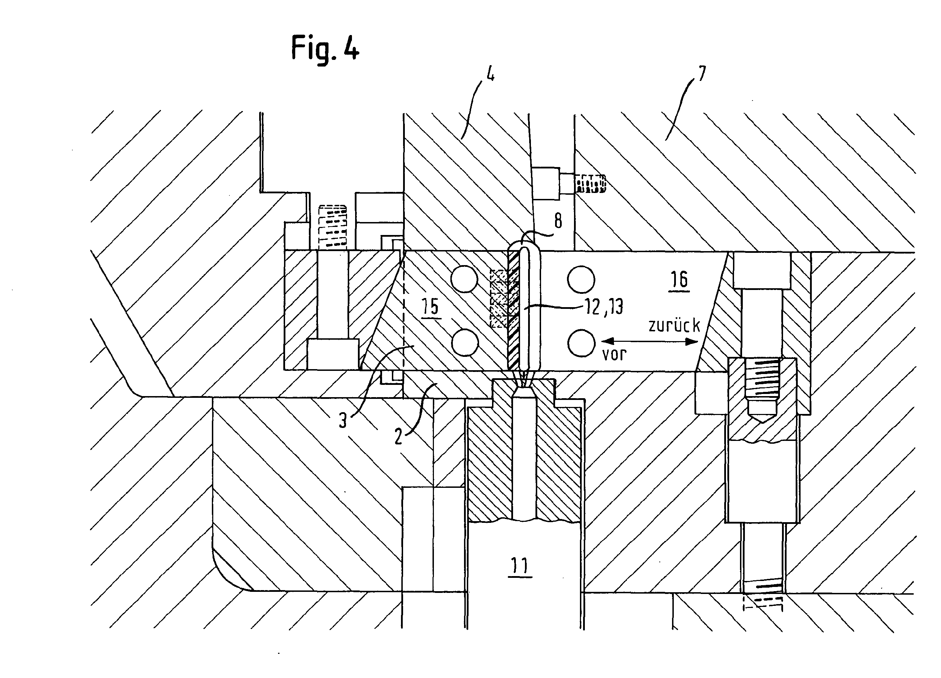

Die Fig. 4 zeigt eine erfindungsgemäße Detaildarstellung einer zweiten Spritzeinheit 11. Die Form, die gebildet wird von der Backe 2, Duplexschieberbacke 3, Griffschieberbacke 4, Kern 5 und Duplexschieberkern 6, wird geschlossen und die beiden Schieber 12 und 13 sind vorgefahren, so dass nur das tragende Spritzgussteil 13 aus einem ersten Kunststoff geformt werden kann. Nach dem Füllvorgang wird mittels einer Düseneinheit (nicht dargestellt) ein weiteres Medium eingespritzt zur Ausbildung eines Hohlraums in diesem Spritzgussteil (12, 13). Die Düseneinheit ist in Fig. 4 in Blickrichtung zu denken. Nach dem Einspritzen des Mediums und erfolgtem Nachruck fahren die Schieber 15 und 16 zurück. Jetzt wird mit einer zweiten Spritzeinheit 11 das Spritzgussteil, z.B. Handgriffe, mit einer zweiten Materialkomponente versehen.

Nach entsprechender Kühlzeit wird das Kunststoffelement, z.B. ein Transportbehälter mittels Abstreifer entformt.

Zusammenfassend geht die Erfindung vom Hauptprinzip aus, dass im selben Spritzgussvorgang oder kurz auf einander folgend, drei unterschiedliche Materialien in die Spritzgussform gespritzt werden, welche aufeinander abgestimmte Eigenschaften aufweisen. Ein Teil des Materials wird dabei in einer vorbestimmten Form in den Fuß des Behältnisses gespritzt und weitere Teile als zweite und dritte Komponente in den Handgriff.

Geeignet für die Erreichung des gewünschten Ergebnisses sind Materialien wir EVA usw., wobei eine gemeinsame Rezyklierbarkeit des Hauptmaterials und der Zweitkomponente aus Kunststoff angestrebt wird.

Die zur Produktion vorhandenen Spritzgussmaschinen werden vorzugsweise aufgerüstet mit einer zweiten, kleinen Spitzeinheit (Extruder), welche schräg oder vertikal zum normalen Hauptextruder steht.

Das System ist nicht nur auf Flaschenkästen anwendbar, sondern auch übertragbar auf alle kastenähnlichen Zweitgebinde (sog. Transport- und Umgebinde, Transportbehälter). Die Handgriffe dieser Behälter müssen bequem, zum Tragen einladend und rutschfest sein.

Die Erfindung ermöglicht die Vollständigkeit der Handgriffe und Behebung aller Nachteile der bekannten Konstruktionen und soll keine teuren Einlegerobotoren benötigen.

## Patentansprüche

1. Verfahren zum Spritzgießen von Kunststoffelementen, insbesondere von Kunststoffhandgriffen, unter Benutzung
- einer ersten Spritzeinheit (9) für das Formen eines tragenden Spritzgussteils (13) aus einem Kunststoff,
- einer Düseneinheit (10) zum Einspritzen eines weiteren Mediums in das Innere des tragenden Spritzgussteils (13), und
- einer zweiten Spritzeinheit (11) für das Formen eines die Qualität der äußeren Oberfläche bestimmenden Spritzgussteils aus einem weiteren Kunststoff (14).

2. Verfahren nach Anspruch 1, wobei die zweite (11) und eventuell jede weitere Spritzeinheit sowie die Düseneinheit (10) mit der ersten Spitzeinheit (9) integriert sind.

3. Verfahren nach Anspruch 1, wobei die zweite (11) und jede weitere Spritzeinheit und/oder Düseneinheit (10) als Zusatzaggregat auf die erste Spritzeinheit (9) aufgesetzt sind.

4. Verfahren nach einem der Ansprüche 1 bis 3, wobei die Spritzeinheiten (9, 11) und die Düseneinheit (10) wahlweise getrennt oder zentral gesteuert werden.

5. Verfahren nach einem der Ansprüche 1 bis 4, wobei das einzuspritzende Medium ein Gas, eine Flüssigkeit, ein Pulver und/oder ein Schaum ist.

6. Verfahren nach einem der Ansprüche 1 bis 5, wobei der zweite Kunststoff (14) weicher ist als der erste.

7. Kunststoffelement, insbesondere Kunststoffhandgriff, das (bzw. der) insbesondere durch ein Spritzgussverfahren nach einem der vorhergehenden Ansprüche hergestellt ist, **gekennzeichnet durch** einen Hohlraum (12) in einem tragenden Spritzgussteil (13), der mit einem weiteren Medium gefüllt ist, und ferner **gekennzeichnet durch** mindestens eine weitere Kunststoffschicht (14) an der Oberfläche des tragenden Spritzgussteils (13).

8. Kunststoffelement nach Anspruch 7, wobei die Oberfläche glatt und weich ist.

9. Vorrichtung zum Spritzgießen von Kunststoffelementen, insbesondere von Kunststoffhandgriffen, umfassend
- eine erste Spritzeinheit (9) für das Formen eines tragenden Spritzgussteils (13) aus einem Kunststoff,
- eine Düseneinheit (10) zum Einspritzen eines weiteren Mediums in das Innere des tragenden Spritzgussteils (13), und
- eine zweite Spritzeinheit (11) für das Formen eines die Qualität der äußeren Oberfläche bestimmenden Spritzgussteils aus einem weiteren Kunststoff (14).

10. Vorrichtung nach Anspruch 9, wobei die zweite (11) und eventuell jede weitere Spritzeinheit sowie die Düseneinheit (10) mit der ersten Spitzeinheit (9) integriert sind.

11. Vorrichtung nach Anspruch 9, wobei die zweite (11) und jede weitere Spritzeinheit und/oder Düseneinheit (10) als Zusatzaggregat auf die erste Spritzeinheit (9) aufgesetzt sind.
